# EUROPEAN PATENT SPECIFICATION

(11) **EP 3 631 129 B1**
(45) Date of publication and mention of the grant of the patent: **10.01.2024**
(21) Application number: 18740282.1
(22) Date of filing: 29.05.2018
(51) Int. Cl.: E05B 47/02, E05B 47/00, E05B 9/04

(54) **DRIVING DEVICE FOR UNLOCKING AND LOCKING A LOCK**
ANTRIEBSVORRICHTUNG ZUM ENTRIEGELN UND VERRIEGELN EINES SCHLOSSES
DISPOSITIF D'ENTRAÎNEMENT POUR DÉVERROUILLER ET VERROUILLER UNE SERRURE

(30) Priority: 31.05.2017 PL 42176717
(43) Date of publication of application: 08.04.2020
(73) Proprietor: Tedee IP spolka z ograniczona odpowiedzialnoscia, 02-127 Warszawa (PL)
(72) Inventor: Litwinski, Artur, 02-632 Warszawa (PL)
(74) Representative: JWP Patent & Trademark Attorneys
(86) International application number: PCT/IB2018/053803
(87) International publication number: WO 2018/220523

(56) References cited:
- EP-A1- 2 365 475
- DE-U1- 9 207 789
- US-B1- 6 418 764

## Description

The subject matter of the invention is a driving device for unlocking and locking a lock enabling access to protected areas, and in particular to so called "intelligent locks", the unlocking or locking of which may be effected without the authorised person directly contacting the lock.

A known from WO2015138747A1 driving device for unlocking and locking a lock enabling access to protected areas, has a driving assembly for driving the lock, within a housing in a form of a bush secured from the outside at one side with a cover and at the other side with a base, with driving assembly components fixed thereto or seated therein. The driving assembly comprises a current generator, electric motor and a gear assembly.

The current generator are four cylindrical primary cells (batteries) placed next to the motor parallel to the motor's axis.

The motor is powered by batteries.

The driving power from the electric motor is transmitted via the gear assembly, consisting of toothed wheels, to a component used to control the lock.

The base has an opening through which passes a control element of the lock, and the second end of this element is connected to the lock mechanism.

The bush, being the housing of the driving device, has teeth at the inside, the teeth cooperating with one of the toothed wheels of the gear assembly of the driving assembly. The driving device is fitted with an electronic control unit which controls the driving assembly. It is placed between the cover and the motor. The electronic control unit is powered by batteries placed in the housing. The electronic control unit may be controlled wirelessly by means of computer software, preferably a mobile device application, via a wireless connection. The device does not require external power supply and can be controlled by means of a smartphone application.

The driving device is installed from the inside of an apartment, in all door types with a profile insert. The so-designed driving device for unlocking a lock is quite large in size because of the size of the power supply batteries and the size of the other components of the driving mechanism which must be enclosed within the housing of the device.

From Polish application PL336314A1 a driving device for a lock is known. The driving device, fixed on the door in a form of a plate fitting, for the motor-driven and manual actuation of a locking cylinder, has a drive shaft for transmitting rotation to the locking cylinder, a knob for manually turning the drive shaft, and a gear motor arranged in the knob for the motor-driven rotation of the drive shaft. A driving toothed wheel is seated on the drive shaft non-rotatably and is connected with the knob such that it transmits torque. The gear motor is coupled to the plate fitting non-rotatably and to the driving toothed wheel by means of a clutch when current is applied.

From German patent application DE102014009826A1 a device for unlocking and locking entrances to access-protected areas is known. The device has a cylindrical housing. The housing encloses a base plate, miniature motor, preferably a direct current motor, electric battery, blocking assembly and control unit. The blocking element of the blocking assembly is a rod with a ring, the rod moved by an electric motor via a torsion spring capable to transmit motion from the motor to the rod. The electric battery is to provide power supply to the control system irrespective of power supplied to the device via an external power supply line. The control unit is controlled via a wireless connection.

From German utility model DE 9207789 U1 a device for unlocking and locking entrances to access-protected areas is known. A lock with motor-driven rotating cylinder core(s) is characterized in that the drive shaft of the motor is located inside a ring connected to rotate with the cylinder housing, the drive shaft and the ring also being connected to rotate with each other.

The objective of the invention is to develop a new driving device for unlocking and locking a lock, being of simple design, and to provide a new solution type.

The driving device of the invention for unlocking and locking a lock enabling access to protected areas comprises a driving assembly comprising a source of electric current, an electric motor and a gear assembly terminating in a toothed gear, and arranged in a rotary housing. The lock has a body, in which a control element of the lock is seated rotatably. Upon mounting of the driving device to the lock the housing is seated in a bearing in the body of the lock by means of the control element, to which the housing is connected in a fixed manner, and the driving device is fitted with a ring with teeth to cooperate with the toothed wheel of the driving assembly, the toothed wheel seated in a bearing rotatably with respect to the housing. The ring is arranged coaxially with the rotary housing and in a fixed manner with respect to the body of the lock. The ring is seated in a bearing in the rotary housing.

It is preferred that the teeth of the ring are outer teeth.

It is further preferred that the housing is connected to the control element by means of a shaped releasable connection.

It is additionally preferred that the housing together with the control element are a monolith.

It is also preferred that the ring is connected with the body of the lock by means of a screw.

It is also preferred that the driving device is fitted with an electronic control unit to control the driving assembly.

It is further preferred that the electronic control unit is fitted with a first sensor and a manual control button cooperating therewith, arranged on the frontal part of the driving device.

It is additionally preferred that the electronic control unit is fitted with a second sensor which establishes angular position of the rotary housing.

It is additionally preferred that the second sensor is an accelerometer (gravity sensor).

It is further preferred that the electronic control unit is controlled wirelessly.

It is more preferred that the electronic control unit is controlled wirelessly by means of computer software, preferably a mobile device application, via a wireless connection.

It is also more preferred that the electronic control unit is controlled wirelessly via a Bluetooth wireless connection.

It is further preferred that the electronic control unit is fitted with a micro USB socket intended to deliver supply voltage and to transfer data.

It is additionally preferred that the driving device is fitted with an electric energy source in a form of a primary or secondary cell.

It is also preferred that the driving device is arranged at the inner side of an entrance to access-protected areas and on the opposite side to the key-controlled part of the lock.

A lock of the second invention comprising a driving device as described above for unlocking and locking said lock.

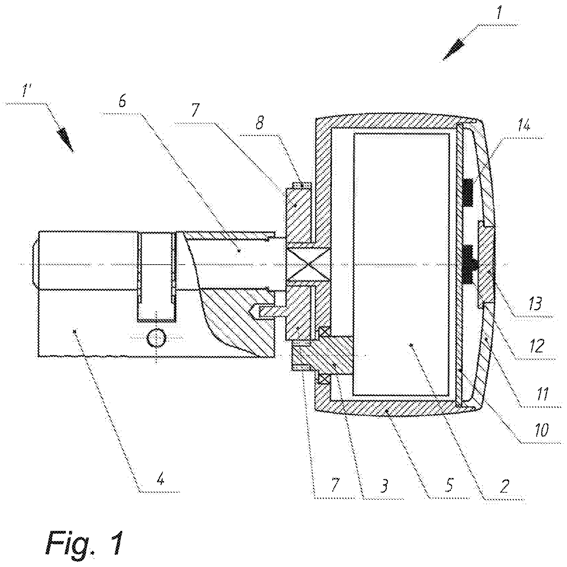

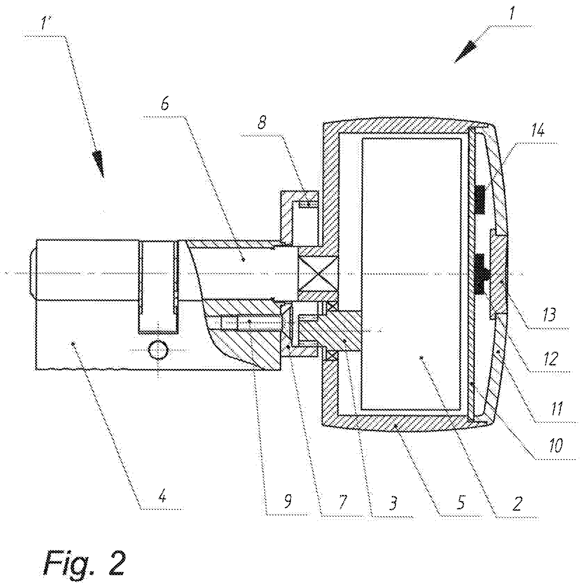

The subject-matter of the invention is shown in an embodiment in the drawing of Fig. 1, which shows a longitudinal section of a driving device for unlocking and locking a lock with a ring having outer teeth, and Fig. 2 shows a longitudinal section of a driving device for unlocking and locking a lock, in a variant of an embodiment not forming part of the invention with a ring having inner teeth.

As shown in the embodiment of the invention in Fig. 1 and in the embodiment of Fig. 2 not forming part of the invention, a driving device 1 for unlocking and locking a lock , the lock enabling access to protected areas, comprises a driving assembly 2 arranged within a rotary housing 5. The lock Γ has a body 4, in which a control element 6 of the lock is seated rotatably. The housing 5 is connected in a fixed manner to the control element 6 and is seated in a bearing in a body 4 of the lock Γ by means of a control element 6.

The driving assembly 2, arranged within the housing 5, usually comprises an electric driving motor, reduction toothed gear and an energy source in a form of an electric cell. It may also be fitted with a clutch. The structure of the driving mechanism 2, being irrelevant to the concept of the invention, is not shown in the drawing.

As shown in the embodiment of the invention in Fig. 1 and in the embodiment of Fig. 2 not forming part of the invention, the driving assembly 2 is fitted with a toothed wheel 3 (one of the wheels of the toothed gear), which is seated in a bearing rotatably with respect to the housing 5.

As shown in Fig. 1 and Fig. 2, the housing 5 is connected to the control element 6 by means of a shaped releasable connection. It is clear that in other embodiments of the invention, the housing 5 may be connected to the control element 6 in another known way which provides a fixed connection of the housing 5 to the control element 6. In a specific case, the housing 5 together with the control element 6 may be a monolith.

The driving device 1 is fitted with a ring 7 with teeth 8 to cooperate with the toothed wheel 3 of the driving assembly 2. The ring 7 is placed coaxially with the rotary housing 5 and in a fixed manner with respect to the body 4 of the lock .

In the embodiment of the invention shown in Fig. 1, the teeth 8 of the ring 7 are outer teeth and the ring 7 is seated in a bearing in the housing 5 and connected to the body 4 of the lock 1 ' by means of a shaped connection.

In the embodiment not forming part of the invention shown in Fig. 2, the teeth 8 of the ring 7 are inner teeth and the ring 7 is connected to the body 4 of the lock 1 ' by means of a screw 9.

It is clear that in other not claimed embodiments, the ring 7 may be connected to the body 4 of the lock 1 ' in another known way which provides a fixed connection of the ring 7 to the body 4 of the lock 1, for example by means of rivets and gluing. In a specific case, the ring 7 together with the body 4 of the lock 1 ' may be a monolith.

As shown in the embodiment of the invention in Fig. 1 and in the embodiment of Fig. 2 not forming part of the invention, the driving device 1 is fitted with an electronic control unit 10 which controls the driving assembly 2. The electronic control unit 10 is arranged within the housing 5, between the driving assembly 2 and the frontal part 11, and is fitted with a first sensor 12, placed in the central part of the electronic control unit 10. The first sensor 12 cooperates with a manual control button 13 arranged on the frontal part 11 of the driving device 1 and enables manual actuation of unlocking or locking of the door. The electronic control unit 10 is also fitted with a second sensor 14 which establishes angular position of the rotary housing 5. The second sensor 14, in the embodiment of the invention shown in Fig. 1 and in the embodiment of Fig. 2 not forming part of the invention, is an accelerometer (a sensor that establishes angular position of the rotary housing with respect to the gravitational field of the Earth) and is arranged on the electronic control unit 10.

The electronic control unit 10 is controlled wirelessly by means of computer software, preferably a mobile device application, via a wireless connection.

It is also clear that the electronic unit 10 may be controlled wirelessly via a Bluetooth wireless connection.

Electronic control unit 10 is fitted with a micro USB socket (not shown) to deliver supply voltage and to transfer data.

The driving device 1 is fitted with an electric energy source in a form of a primary or secondary cell.

The driving device 1 is arranged at the inner side of an entrance to access-protected areas and on the opposite side to the key -controlled part of the lock 1'.

Pressing the manual control button 13 causes unlocking of the locked lock or locking of the unlocked lock , preferably with a delay. The second sensor 14 transmits information on the position of the housing 5 to the electronic control unit 10 and to the mobile device of the person controlling the driving device 1, whereby the person has information on unlocking or locking of the lock 1 ' .

In the solution being the driving device 1 of the invention for unlocking and locking the lock , the housing 5 is connected in a rigid (fixed) manner to a control element 6, with the control element 6 being seated in a bearing in the body of the lock . In this solution, the control element 6 of the lock 1 ' transmits both the torque from the driving mechanism 2 and the transverse and axial forces, which is why any other bearing of the housing 5 of the driving device 1 with respect to the body 4 of the lock is unnecessary. The only bearing of the housing 5 of the driving device 1 is the control element 6 of the lock 1 ' , which provides the idea of the driving device 1 of the invention.

## Claims

1. Driving device (1) for unlocking and locking a lock (1') enabling access to protected areas, comprising a driving assembly (2) comprising a source of current, an electric motor and a gear assembly terminated in a toothed wheel (3), and arranged in a rotary housing (5), wherein the lock (1') has a body (4), in which a control element (6) of the lock (1') is seated rotatably, wherein upon mounting of the driving device (1) to the lock (1') the housing (5) is seated in a bearing in the body (4) of the lock (1') by means of the control element (6) to which the housing (5) is connected in a fixed manner, and the driving device (1) is fitted with a ring (7) with teeth (8) cooperating with the toothed wheel (3) of the driving assembly (2), the toothed wheel (3) seated in a bearing rotatably with respect to the housing (5), and the ring (7) is arranged coaxially with the rotary housing (5) and in a fixed manner with respect to the body (4) of the lock (1'), **characterized in that** the ring (7) is seated in a bearing in the rotary housing (5).

2. Driving device of claim 1, **characterized in that** the teeth (8) of the ring (7) are outer teeth.

3. Driving device of claim 1, **characterized in that** the housing (5) is connected to the control element (6) by means of a shaped releasable connection.

4. Driving device of claim 1, **characterized in that** the housing (5) together with the control element (6) is a monolith.

5. Driving device of claim 1, **characterized in that** the ring (7) is connected to the body (4) of the lock (1') by means of a shaped connection.

6. Driving device of claim 1, **characterized in that** it is fitted with an electronic control unit (10) which controls the driving assembly (2).

7. Driving device of claim 6, **characterized in that** the electronic control unit (10) is fitted with a first sensor (12) and a manual control button (13) cooperating with the first sensor (12), the manual control button (13) being arranged on the frontal part (11) of the driving device (1).

8. Driving device of claim 6, **characterized in that** the electronic control unit (10) is fitted with a second sensor (14) which establishes angular position of the rotary housing (5).

9. Driving device of claim 8, **characterized in that** the second sensor (14) is an accelerometer (gravity sensor).

10. Driving device of claim 6, **characterized in that** the electronic control unit (10) is controlled wirelessly, preferably by means of computer software, preferably a mobile device application, via a wireless connection.

11. Driving device of claim 10, **characterized in that** the electronic control unit (10) is controlled wirelessly via a Bluetooth wireless connection.

12. Driving device of claim 6, **characterized in that** the electronic control unit (10) is fitted with a micro USB socket intended to deliver supply voltage and to transfer data.

13. Driving device of claim 1, **characterized in that** it is fitted with an electric energy source in a form of a primary or secondary cell.

14. Driving device of claim 1, **characterized in that** it is arranged at the inner side of an entrance to access-protected areas and on the opposite side to the key-controlled part of the lock (1').

15. A lock (1') comprising a driving device (1) of any of the claims 1 to 14 for unlocking and locking said lock (1').

## Patentansprüche

1. Antriebsvorrichtung (1) zum Entriegeln und Verriegeln eines den Zugang zu geschützten Bereichen ermöglichenden Schlosses (1'), umfassend eine Antriebsanordnung (2), umfassend eine Stromquelle, einen Elektromotor und eine in einem Zahnrad (3) endende und in einem drehbaren Gehäuse (5) angeordnete Getriebeanordnung, wobei das Schloss (1') einen Körper (4) aufweist, in dem ein Steuerelement (6) des Schlosses (1') drehbar gelagert ist, wobei bei Montage der Antriebsvorrichtung (1) an dem Schloss (1') das Gehäuse (5) 1s mittels des Steuerelements (6), mit dem das Gehäuse (5) fest verbunden ist, in einem Lager im Körper (4) des Schlosses (1') gelagert ist, und die Antriebsvorrichtung (1) mit einem mit dem Zahnrad (3) der Antriebsanordnung (2) zusammenwirkenden Ring (7) mit Zähnen (8) ausgestattet ist, wobei das Zahnrad (3) in einem Lager drehbar gegenüber dem Gehäuse (5) gelagert ist, und der Ring (7) koaxial zum Drehgehäuse (5) und fest bezüglich zum Körper (4) des Schlosses (1'), **dadurch gekennzeichnet, dass** der Ring (7) in einem Lager im Drehgehäuse (5) sitzt.

2. Antriebsvorrichtung gemäß Anspruch 1, **dadurch gekennzeichnet, dass** die Zähne (8) des Rings (7) äußere Zähne sind.

3. Antriebsvorrichtung gemäß Anspruch 1, **dadurch gekennzeichnet, dass** das Gehäuse (5) mittels einer geformten lösbaren Verbindung mit dem Steuerelement (6) verbunden ist.

4. Antriebsvorrichtung gemäß Anspruch 1, **dadurch gekennzeichnet, dass** das Gehäuse (5) zusammen mit dem Steuerelement (6) ein Monolith ist.

5. Antriebsvorrichtung gemäß Anspruch 1, **dadurch gekennzeichnet, dass** der Ring (7) mittels einer geformten Verbindung mit dem Körper (4) des Schlosses (1') verbunden ist.

6. Antriebsvorrichtung gemäß Anspruch 1, **dadurch gekennzeichnet, dass** diese mit einer elektronischen Steuereinheit (10) ausgestattet ist, die die Antriebsanordnung (2) steuert.

7. Antriebsvorrichtung gemäß Anspruch 6, **dadurch gekennzeichnet, dass** die elektronische Steuereinheit (10) über einen ersten Sensor (12) und eine mit dem ersten Sensor (12) zusammenwirkende manuelle Bedientaste (13) verfügt, wobei die manuelle Bedientaste (13) am vorderen Teil (11) der Antriebsvorrichtung (1) angeordnet ist.

8. Antriebsvorrichtung gemäß Anspruch 6, **dadurch gekennzeichnet, dass** die elektronische Steuereinheit (10) mit einem zweiten Sensor (14) ausgestattet ist, der die Winkelposition des drehbaren Gehäuses (5) feststellt.

9. Antriebsvorrichtung gemäß Anspruch 8, **dadurch gekennzeichnet, dass** der zweite Sensor (14) ein Beschleunigungsmesser (Schwerkraft-Sensor) ist.

10. Antriebsvorrichtung gemäß Anspruch 6, **dadurch gekennzeichnet, dass** die elektronische Steuereinheit (10) drahtlos, vorzugsweise mittels Computersoftware, vorzugsweise einer mobilen Geräteanwendung, über eine drahtlose Verbindung gesteuert wird.

11. Antriebsvorrichtung gemäß Anspruch 10, **dadurch gekennzeichnet, dass** die elektronische Steuereinheit (10) drahtlos über eine drahtlose Bluetooth-Verbindung gesteuert wird.

12. Antriebsvorrichtung gemäß Anspruch 6, **dadurch gekennzeichnet, dass** die elektronische Steuereinheit (10) mit einer Micro-USB-Buchse ausgestattet ist, die dazu bestimmt ist, Versorgungsspannung zu liefern und Daten zu übertragen.

13. Antriebsvorrichtung gemäß Anspruch 1, **dadurch gekennzeichnet, dass** diese mit einer elektrischen Energiequelle in Form einer Primär- oder Sekundärzelle ausgestattet ist.

14. Antriebsvorrichtung gemäß Anspruch 1, **dadurch gekennzeichnet, dass** sie an der Innenseite eines Zugangs zu zugangsgeschützten Bereichen und auf der gegenüberliegenden Seite des schlüsselgesteuerten Teils des Schlosses (1') angeordnet ist.

15. Schloss (1') mit einer Antriebsvorrichtung (1) gemäß einem der Ansprüche 1 bis 14 zum Entriegeln und Verriegeln des Schlosses (1').

## Revendications

1. Dispositif d'entraînement (1) pour déverrouiller et verrouiller une serrure (1') permettant l'accès à des zones protégées, comprenant un ensemble d'entraînement (2) comprenant une source de courant, un moteur électrique et un ensemble d'engrenage terminé par une roue dentée (3), et disposé dans un boîtier rotatif (5), dans lequel la serrure (1') a un corps (4), dans lequel un élément de commande (6) de la serrure (1') est logé de manière rotative, dans lequel, lors du montage du dispositif d'entraînement (1) sur la serrure (1'), le boîtier (5) est logé dans un palier dans le corps (4) de la serrure (1') au moyen de l'élément de commande (6) auquel le boîtier (5) est connecté de manière fixe, et le dispositif d'entraînement (1) est équipé d'une bague (7) avec des dents (8) coopérant avec la roue dentée (3) de l'ensemble d'entraînement (2), la roue dentée (3) étant logée dans un palier de manière rotative par rapport au boîtier (5), et la bague (7) est disposée de manière coaxiale au boîtier rotatif (5) et de manière fixe par rapport au corps (4) de la serrure (1'), **caractérisé en ce que** la bague (7) est logée dans un palier dans le logement rotatif (5).

2. Dispositif d'entraînement selon la revendication 1, **caractérisé en ce que** les dents (8) de la bague (7) sont des dents extérieures.

3. Dispositif d'entraînement selon la revendication 1, **caractérisé en ce que** le boîtier (5) est relié à l'élément de commande (6) au moyen d'une connexion libérable profilée.

4. Dispositif d'entraînement selon la revendication 1, **caractérisé en ce que** le boîtier (5) avec l'élément de commande (6) est un monolithe.

5. Dispositif d'entraînement selon la revendication 1, **caractérisé en ce que** la bague (7) est reliée au corps (4) de la serrure (1') au moyen d'une connexion profilée.

6. Dispositif d'entraînement selon la revendication 1, **caractérisé en ce qu'**il est équipé d'une unité de commande électronique (10) qui commande l'ensemble d'entraînement (2).

7. Dispositif d'entraînement selon la revendication 6, **caractérisé en ce que** l'unité de commande électronique (10) est équipée d'un premier capteur (12) et d'un bouton de commande manuelle (13) coopérant avec le premier capteur (12), le bouton de commande manuelle (13) étant disposé sur la partie frontale (11) du dispositif d'entraînement (1).

8. Dispositif d'entraînement selon la revendication 6, **caractérisé en ce que** l'unité de commande électronique (10) est équipée d'un second capteur (14) qui établit la position angulaire du boîtier rotatif (5).

9. Dispositif d'entraînement selon la revendication 8, **caractérisé en ce que** le second capteur (14) est un accéléromètre (capteur de gravité).

10. Dispositif d'entraînement selon la revendication 6, **caractérisé en ce que** l'unité de commande électronique (10) est commandée sans fil, de préférence au moyen d'un logiciel informatique, de préférence une application de dispositif mobile, via une connexion sans fil.

11. Dispositif d'entraînement selon la revendication 10, **caractérisé en ce que** l'unité de commande électronique (10) est commandée sans fil via une connexion sans fil Bluetooth.

12. Dispositif d'entraînement selon la revendication 6, **caractérisé en ce que** l'unité de commande électronique (10) est équipée d'une prise micro USB destinée à délivrer une tension d'alimentation et à transférer des données.

13. Dispositif d'entraînement selon la revendication 1, **caractérisé en ce qu'**il est équipé d'une source d'énergie électrique sous forme de cellule primaire ou secondaire.

14. Dispositif d'entraînement selon la revendication 1, **caractérisé en ce qu'**il est disposé du côté intérieur d'une entrée dans des zones protégées contre l'accès et du côté opposé à la partie de la serrure (1') commandée par clé.

15. Serrure (1') comprenant un dispositif d'entraînement (1) selon l'une quelconque des revendications 1 à 14 pour déverrouiller et verrouiller la serrure (1').
